Europäisches Patentamt

European Patent Office

Office européen des brevets

(19)

(11) Publication number: 0 338 919
A2

# (12) EUROPEAN PATENT APPLICATION

(21) Application number: 89401082.6

(22) Date of filing: 19.04.89

(51) Int. Cl.⁴: C 08 K 7/02
C 08 J 3/22

(30) Priority: 20.04.88 JP 97998/88
20.04.88 JP 97999/88

(43) Date of publication of application:
25.10.89 Bulletin 89/43

(84) Designated Contracting States: FR GB

(71) Applicant: OSAKA GAS COMPANY, LIMITED
1-2 Hiranomachi 4-chome Chuo-ku
Osaka-shi Osaka-fu (JP)

(72) Inventor: Inamori, Masayuki
1-4-5 Kasugadenaka Konohana-ku
Osaka-shi Osaka-fu (JP)

Hamaoka, Satoru
Nagatatenjinkoso 1-724 6-5, Tenjin-cho Nagata-ku
Kobe-shi Hyogo-ken (JP)

Hachiya, Akihiro
6-32-407, Matsugamotomachi
Ibaragi-shi Osaka-fu (JP)

(74) Representative: Orès, Bernard et al
Cabinet ORES 6, Avenue de Messine
F-75008 Paris (FR)

(54) Pelletized fiber-containing coloring resin composition and process for preparing same.

(57) Disclosed are:
1. a pelletized fiber-containing coloring resin composition comprising:

(a) at least one member selected from the group consisting of carbon fibers, glass fibers and aramid fibers,

(b) a fiber size soluble or dispersible in a liquid medium,

(c) whiskers and

(d) a coloring agent; and

2. a process for preparing a pelletized fiber-containing coloring resin composition, the process comprising the steps of applying a liquid to (a) at least one member selected from the group consisting of carbon fibers, glass fibers and aramid fibers, said liquid comprising (b) a fiber size soluble or dispersible in the liquid and unsaturated polyester resin, (c) whiskers and (d) a coloring agent, mixing the fibers in a wet state, cutting or dividing the mixture into pellets and drying the pellets.

EP 0 338 919 A2

# Description

## PELLETIZED FIBER-CONTAINING COLORING RESIN COMPOSITION AND PROCESS FOR PREPARING SAME

### FIELD OF THE INVENTION

The present invention relates to a pelletized fiber-containing coloring resin composition and a process for preparing the same.

The pelletized fiber-containing coloring resin compositions of the present invention are useful as materials for preparing a resin-based composite material or as a reinforcement for such composite material, and are capable of giving a distinct color uniformly to the composite material.

### BACKGROUND OF THE INVENTION

Carbon fibers, glass fibers, aramid fibers and the like are used, for example, to impart electrical conductivity to resins, rubbers, cement or the like and to improve their mechanical properties and the dimensional stability of molded products. Stated more specifically, for example carbon fibers of 1 mm or less in fiber length are treated with a fiber size and mixed with a base material in preparing a composite material in order chiefly to give electrical conductivity to the composite material and enhance its slidability as well as to improve its strength. These properties are improved by causing the fiber size to enhance the adhesion between the base material and the carbon fibers. Conventionally carbon fibers have been surface-treated with a fiber size by applying a fiber size-containing liquid to carbon fibers having, e.g., a strip-, mat- or tow-like shape, drying the wet fibers, winding the dried fibers on a bobbin and cutting them into short fibers.

However, said conventional surface treatment of carbon fibers entails the following drawbacks.

(A) Since carbon fibers are cut after treatment with a fiber size, the fiber size is not supplied to the cut section of fibers, failing to fully improve the properties of composite material.

(B) Dust is produced in cutting the carbon fibers, deteriorating the work environment.

(C) Because carbon fibers are electroconductive, leakages of electricity and electric shock must be prevented by electrically insulating an operator panel of short fiber-processing apparatus, a nearby switch box and the like.

The problems (A) and (B) are encountered also in use of glass fibers and aramid fibers.

Carbon short fibers for example to be mixed with a resin after pelletization to be described later suffer the following problems.

(i) A predetermined amount of carbon short fibers is added to pellets or grains of resin and the mixture is uniformly dispersed by a high speed rotary mixer. The dispersion being kneaded at an elevated temperature and pressure is extruded into a rope. The extrudate is cooled and cut to 3 to 5 mm length, giving a pelletized mixture of carbon short fibers and resin.

In this case, the fibers tend to become broken in the high speed rotary mixer, and the fiber size may separate from the fibers. Consequently the composite material containing such pellets are not fully improved in properties.

(ii) A predetermined amount of carbon short fibers are added to pellets or grains of resin and the mixture is uniformly dispersed by a high speed rotary mixer. The dispersion being kneaded at an elevated temperature and pressure is extruded into a rope. The rope is cut to 3 to 5 mm length, cooled and dried, giving a pelletized mixture of carbon short fibers and resin.

In this case, the same problem as in (i) arises from use of high speed rotary mixer.

(iii) Specific amounts of pellets or grains of resin and carbon short fibers are continuously fed to an extruder wherein the mixture being kneaded at an elevated temperature and pressure is extruded into a rope. The rope is cooled and cut to 3 to 5 mm length, giving a pelletized mixture.

In either case, a resin and carbon fibers need to be kneaded at an elevated temperature and pressure and pelletized.

Of said problems on carbon fibers, some are posed in use of glass fibers and aramid fibers.

### SUMMARY OF THE INVENTION

An object of the present invention is to provide a fiber-containing resin composition useful as a reinforcement for resins, rubbers, cement or the like and capable of improving the properties of these materials to a great extent.

Another object of the invention is to provide a fiber-containing resin composition usable as a material for producing a composite material outstanding in various properties.

A further object of the invention is to provide a fiber-containing resin composition free from the possibility of impairing the work environment during the production.

A still further object of the invention is to provide a fiber-containing resin composition which can be produced by a simplified procedure.

Other objects and features of the invention will become apparent from the following description.

According to the invention there are provided:

(1) a pelletized fiber-containing coloring resin composition comprising

(a) at least one member selected from the group consisting of carbon fibers, glass fibers and aramid fibers,

(b) a fiber size soluble or dispersible in a liquid medium,

(c) whiskers and

(d) a coloring agent;

(2) a process for preparing a pelletized fiber-containing coloring resin composition, the process comprising the steps of applying a liquid to (a) at least one member selected from the group consisting of carbon fibers, glass fibers and aramid fibers, said liquid comprising (b) a fiber size soluble or dispersible in the liquid, (c) whiskers and (d) a coloring agent, mixing the fibers in a wet state, cutting or dividing the mixture into pellets and drying the pellets;

    (3) a pelletized fiber-containing coloring resin composition comprising

        (a) at least one member selected from the group consisting of carbon fibers, glass fibers and aramid fibers,

        (b) a fiber size soluble or dispersible in a liquid medium,

        (c) whiskers,

        (d) a coloring agent and

        (e) a matrix resin;

    (4) a process for preparing a pelletized fiber-containing coloring resin composition, the process comprising the steps of applying a liquid to (a) at least one member selected from the group consisting of carbon fibers, glass fibers and aramid fibers, said liquid comprising (b) a fiber size soluble or dispersible in the liquid, (c) whiskers and (d) a coloring agent, mixing (e) a matrix resin in a wet state with (a) the fibers during or after application of the liquid, cutting or dividing the mixture into pellets and drying the pellets.

The compositions and the processes for preparing the same as described above in items (1) to (4) are hereinafter collectively referred to, when required, as "group I invention".

According to the invention, there are further provided:

    (5) a pelletized fiber-containing coloring resin composition comprising

        (a) at least one member selected from the group consisting of carbon fibers, glass fibers and aramid fibers,

        (b) a fiber size soluble or dispersible in a liquid medium,

        (c) whiskers,

        (d) a coloring agent and

        (f) a granular carbon material;

    (6) a process for preparing a pelletized fiber-containing coloring resin composition, the process comprising the steps of applying a liquid to (a) at least one member selected from the group consisting of carbon fibers, glass fibers and aramid fibers, said liquid comprising (b) a fiber size soluble or dispersible in the liquid, (c) whiskers, (d) a coloring agent and (f) a granular carbon material, mixing the fibers in a wet state, cutting or dividing the mixture into pellets and drying the pellets;

    (7) a pelletized fiber-containing coloring resin composition comprising

        (a) at least one member selected from the group consisting of carbon fibers, glass fibers and aramid fibers,

        (b) a fiber size soluble or dispersible in a liquid medium,

        (c) whiskers,

        (d) a coloring agent,

        (e) a matrix resin and

        (f) a granular carbon material; and

    (8) a process for preparing a pelletized fiber-containing coloring resin composition, the process comprising the steps of applying a liquid to (a) at least one member selected from the group consisting of carbon fibers, glass fibers and aramid fibers, said liquid comprising (b) a fiber size soluble or dispersible in the liquid, (c) whiskers, (d) a coloring agent and (f) a granular carbon material, mixing (e) a matrix resin with (a) the fibers in a wet state during or after application of the liquid, cutting or dividing the mixture into pellets and drying the pellets.

The compositions and the processes for preparing the same as described above in items (5) to (8) are hereinafter collectively referred to, when required, as "group II invention".

To mitigate or eliminate the aforesaid prior art problems, we conducted extensive research and found that the prior art problems can be markedly alleviated or substantially obviated when preparing in a wet state a pelletized fiber-containing coloring resin composition from carbon fibers, a fiber size, whiskers and a coloring agent or a pelletized fiber-containing coloring resin coposition from these components and a matrix resin.

A further discovery was that when the solution or dispersion to be used in the above process contains a coloring additive, it is easy to uniformly and distinctly color the composite material. The group I invention was accomplished based on these novel findings.

Our research also revealed that when a granular carbon material is incorporated into the composition, good slidability and electrical conductivity can be imparted to the composition. The group II invention was accomplished on the basis of these novel findings.

The carbon fibers, glass fibers and aramid fibers for use in the invention are not specifically limited in respect of the shape, materials for producing the fibers and the like. For example, carbon fibers for use herein can be any of long fibers, tow-like fibers and mat-shaped fibers and can be those prepared from any of coal, petroleum and organic fibers.

Fiber sizes or fiber-sizing materials useful in the invention are those soluble or dispersible in a liquid medium. Examples of fiber sizes are epoxy resin, phenolic resin, polyamide resin, urethane resin, unsaturated polyester resin, rubber, etc. which are used in the form of a solution, dispersion or the like. The concentration of a solution or dispersion of such fiber size is not specifically limited and usually ranges from about 1 to about 10% by weight. At least two types of fiber size may be used in mixture. The term "fiber size" used herein is intended to denote an agent capable of converging fibers and holding the fibers in the converged state.

Solvents or liquid mediums to be used herein for dissolving or dispersing the resin are not specifically limited and include, for example, water, toluene, ethanol, methyl ethyl ketone, etc. The solvent and liquid medium for use herein may be suitably selected depending on the kind of the fiber size used.

Preferred examples of useful whiskers are potassium titanate whiskers, aluminum oxide whiskers and white whiskers in view of reinforcing and masking effects. Granular whiskers such as titanium dioxide may be used in producing only a masking effect.

Examples of coloring agents useful in the invention are titanium oxide, cadmium red, cadmium yellow, cobalt blue, perinone pigment (red), etc.

Examples of matrix resins useful in the invention are polyamide resin, polyphenylene sulphite resin, polyacetal resin, polypropylene resin, etc. which are solid at room temperature. The term "matrix resin" used herein refers to a resin usable as a matrix for carbon fiber-reinforced plastics (CFRP) in preparation of CFRP using the pelletized fiber-containing coloring resin composition of the invention.

Meso-carbon microbeads, carbon black or like granular carbon materials may be incorporated into the composition of the invention in order to provide slidability, electroconductivity and like properties.

The amount of fiber size used in the invention is about 0.5 to about 10 parts by weight, preferably about 1 to about 8 parts by weight, per 100 parts by weight of fibers such as carbon fibers. The fiber size content in less than this range provides the fibers with a poor retention of shape, whereas the excess fiber size content gives a reduced degree of fiber-reinforcing effect.

According to the invention, whiskers are used to improve the properties of a composite material and the degree of color forming property. The amount of whiskers is variable depending on the kind of fibers, extent of coloration, properties of coloring agent used, etc. and is not critical. The amount is determinable depending on the purpose of use. For example, potassium titanate whiskers used can improve the mechanical strength of composite material nd impart a pleasing color even if black carbon fibers are used. A preferred amount of potassium titanate whiskers used is about 2 to about 100 parts by weight per 100 parts by weight of carbon fibers.

A lower content of coloring agent than a specified range results in poor level of coloration, whereas its higher content may reduce the degree of properties of composite material. The amount of coloring agent is determined, as of whiskers, according to the purpose of use. Usually the amount of coloring agent varies depending on the level of masking effect attainable by whiskers used even if the same coloring agent is used for forming the same color. For example, when carbon fibers are used as fibers and potassium titanate as whiskers, the amount of cadmium yellow used as a coloring agent is about 0.1 to about 10 parts by weight per 100 parts by weight of carbon fibers. When granular carbon materials such as carbon black and the like capable of rendering the resin composition black are used in the group II invention, the amount of coloring agent is usually about 0.1 to about 30 parts by weight per 100 parts by weight of carbon fibers.

The amount of granular carbon material used in the invention is widely variable according to the purpose of use but usually ranges from about 30 to about 900 parts by weight per 100 parts by weight of carbon fibers. For imparting electroconductivity to a carbon fiber-containing composite material, at least about 30 parts by weight of a granular carbon material is preferably used per 100 parts by weight of carbon fibers to achieve homogeneous dispersion. Reversely, up to about 900 parts by weight of granular carbon material can be used per 100 parts by weight of carbon fibers to assure the intended sliding performance of granules.

In short, the compositions (1) and (3) of the group I invention comprise the following amounts of components.

The composition (1) comprises:

    (a) 100 parts by weight of at least one member selected from the group consisting of carbon fibers, glass fibers and aramid fibers,

    (b) about 0.5 to about 10 parts by weight of a fiber size,

    (c) about 2 to about 100 parts by weight of whiskers and

    (d) about 0.1 to about 10 parts by weight of a coloring agent.

The composition (3) comprises:

    (a) 100 parts by weight of at least one member selected from the group consisting of carbon fibers, glass fibers and aramid fibers,

    (b) about 0.5 to about 10 parts by weight of a fiber size,

    (c) about 2 to about 100 parts by weight of whiskers,

    (d) about 0.1 to about 10 parts by weight of a coloring agent and

    (e) about 60 to about 1000 parts by weight of a matrix resin.

The compositions (5) and (7) of the group II invention comprise the following amounts of components.

The composition (5) comprises:

    (a) 100 parts by weight of at least one member selected from the group consisting of carbon fibers, glass fibers and aramid fibers,

    (b) about 0.5 to about 10 parts by weight of a fiber size,

    (c) about 2 to about 100 parts by weight of whiskers,

    (d) about 0.1 to about 30 parts by weight of a coloring agent and

    (f) about 30 to about 900 parts by weight of a granular carbon material.

The composition (7) comprises:

    (a) 100 parts by weight of at least one member selected from the group consisting of carbon fibers, glass fibers and aramid fibers,

    (b) about 0.5 to about 10 parts by weight of a fiber size,

    (c) about 2 to about 100 parts by weight of whiskers,

    (d) about 0.1 to about 30 parts by weight of a coloring agent,

    (e) about 60 to about 1000 parts by weight of a matrix resin and

(f) about 30 to about 900 parts by weight a granular carbon material.

The compositions of the group I invention are prepared as follows. A coloring agent, whiskers and a fiber size are applied to carbon fibers or like fibers by a desired method, for example, by immersing the fibers in a solution or a dispersion of a fiber size containing a coloring agent and whiskers or by spraying over the fibers a solution or dispersion of a fiber size containing a coloring agent and whiskers. The excess liquid is removed from the fibers by a dryer, a roller or a centrifugal separator or like desired means. The mixture is extruded by a mixing extruder or the like as it is or as mixed with a matrix resin and the extrudate is cut or divided in a wet state to specific size (e.g. 4 mm in diameter and 5 mm in length). The cut or divided shaped body retains the shape because of the presence of fiber size therein, and when dried can be handled more easily. Most preferably the excess liquid is removed by a dryer. If the removal is done by other means, for example only the coloring agent may be eliminated, resulting in fluctuation of composition or in inhomogeneity. Thus care is needed to avoid this objection.

The order for mixing the coloring agent, whiskers and matrix resin is not limited to the above. For example, the matrix resin can be incorporated into the liquid before application of the liquid. Yet the above mixing orders can produce the most homogeneous mixture, hence desirable.

For pelletization of the mixture, a mixing extruder capable of mincing materials can be conveniently used because the mixing extruder can compress the mixture and simultaneously cut the fibers, producing bean-sized pellets.

The size of pellets is not specifically limited in the invention. Suitable pellets are those having a diameter or length of about 10 mm or less, and a typical section length of preferably from about 1 to about 10 mm, more preferably from about 3 to about 7 mm. Coarse grains are difficult to mix homogeneously with a resin or the like, whereas fine grains are difficult to handle.

The compositions of the group II invention can be produced by the same method as above, namely in the same manner as done in preparation of compositions of the group I invention with the exception of using a solution or dispersion of a fiber size containing a coloring agent, whiskers and a granular carbon material.

The pelletized fiber-containing coloring resin composition of the invention are markedly useful as a reinforcement for fiber-reinforced resins, fiber-reinforced rubbers or the like.

Moreover, the pelletized fiber-containing coloring resin composition containing a matrix resin according to the invention can be extruded or molded into a fiber-reinforced resin shaped product of desired color without addition of a matrix resin. Yet, of course, the composition of shaped product can be varied by adding a matrix resin, coloring agent and the like before shaping.

Since whiskers are capable of producing a masking effect and compensating the reduction of properties due to the presence of coloring agent, shaped products of uniformly pleasingly colored fiber-reinforced resin can be obtained even in use of carbon fibers.

Because the pelletized fiber-containing coloring resin composition is produced in a wet state according to the invention, it is possible to prevent the deterioration of work environment, leaks of electricity and electric shock (in use of carbon fibers) which would occur due to dust being suspended during the production. Moreover, dust is not produced in shaping a composite material containing the composition of the invention used as a reinforcement.

According to the invention, the fiber size remains adhered to ends of pelletized fibers formed by cutting or dividing the shaped product. Consequently when a water-resistant fiber size is used, the water in the atmosphere is prevented from penetrating into the fibers. This feature contributes to improvements in properties of composite material.

Since the composition of the invention is produced in a wet state and requires no application of pressure or heat, the producing process can be simplified. Further the composition of the invention is easy to handle because of its pellet shape. Accordingly in producing a composite material, it is possible to feed easily and uniformly a matrix material (resin, rubber or the like) and the composition of the invention to a producing apparatus (e.g. injection molding machine in case of molding a resin).

When using the composition of the invention, manufacturers of shaped products need not make ready fibers, coloring agent and whiskers nor necessitate any equipment for mixing these materials. In the production of composite materials, uniformly colored fiber-reinforced resin shaped products can be formed merely by adding a matrix material and other desired additives to the composition of the invention. Thus the compositions of the invention provides a great economical advantage.

In use, the fibers uniformly impregnated with the composition of the invention are fed to an apparatus for producing composite materials with the result that it is possible to produce shaped products stable in quality and having the fibers uniformly dispersed in the matrix without encountering the problem of blocking the fibers to be frequently raised in making fiber-reinforced composite materials.

Conjoint use of whiskers and coloring agent in the invention eliminates the possibility of reducing the strength of composite material due to the presence of coloring agent. In this case, whiskers of white color results in formation of beautiful color owing to the masking effect produced by the whiskers.

## EXAMPLES

The present invention will be described below in greater detail with reference to the following examples in which the parts and percentages are all by weight.

## Example 1

To 9 g of an emulsion of epoxy resin at a concentration of 50% were added with stirring 280 g of water, 25 g of potassium titanate whiskers ($K_2Ti_6O_{13}$) and 2.5 g of perinone pigment (red) serving as a coloring pigment to give a liquid mixture. Mat-shaped pitch-type carbon fibers (75 g) were impregnated with the liquid mixture (316.5 g) and manually pressed to achieve uniform spread. The wet fibers were predried at 80°C in a hot-air drying oven to evaporate off the excess water. The predried fibers weighed 184.5 g.

The predried fibers were placed in a mixing extruder to produce an extrudate of 3 mm in diameter, which was cut to 5 mm length and dried. The drying was done while elevating the temperature from 100°C over a period of 30 minutes to 165°C at which the pellets were maintained for 25 minutes and each weighed 99.2 g when dried. The pellets of resin composition had a brown color and each measured a diameter of about 3 mm and a length of about 4.5 mm.

Twenty parts by weight of pelletized resin composition was mixed with 80 parts by weight of nylon 12 powder. The mixture was press molded into a sheet-like molded product of 80 mm in width and 2 mm in thickness. The press molding was conducted under the following conditions. The mixture was predried at a temperature of 80°C for 3 hours. The molding temperature was 195 to 240°C in the cylindrical portion and 240°C in the die. The screw was rotated at 130 rpm. The drawing for cooling was performed at a velocity of 69.8 cm/min. The section of the molded product was observed under an optical microscope and was found to have the carbon fibers substantially uniformly dispersed in the matrix.

## Example 2

A 280 g quantity of water was added to 20 g of an emulsion of ether-ester type anionic polyurethane at a 30% concentration. Then 25 g of whiskers and 5 g of cadmium yellow serving as a coloring agent were added, giving a liquid mixture. The liquid mixture (330 g) was impregnated into mat-shaped pitch-type carbon fibers (75 g). The wet fibers were predried at 70°C in a hot-air drying oven to evaporate off the excess water. The predried fibers weighed 180 g.

The fibers were placed into a mixing extruder to produce an extrudate of 3 mm in diameter, which was cut to 5 mm length and dried, giving a pelletized resin composition. The drying was done while elevating the temperature from 50°C over a period of 20 minutes to 120°C at which the pellets were maintained for 20 minutes, each weighing 99 g when dried.

Twenty parts by weight of pellets of resin composition were mixed with 80 parts by weight of nylon 6 powder. The mixture was extruded into a sheet-like pale yellow extrudate of 80 mm in width and 2 mm in thickness. The extrusion was conducted under the following conditions. The mixture was predried at a temperature of 80°C for 3 hours. The extruding temperature was 195 to 240°C in the cylindrical portion and 265°C in the die. The screw was rotated at 130 rpm. The drawing for cooling was effected at a velocity of 69.8 cm/min. The section of the molded product was observed under an optical microscope and was found to have the carbon fibers substantially uniformly dispersed in the matrix.

## Example 3

The same procedure as in Example 1 was repeated under the same conditions with the exception of using cobalt blue as a pigment, producing shaped products of the same composition as in Example 1. The color of shaped product was cobalt blue.

## Example 4

A 280 g quantity of water was added to 9 g of a 50% aqueous solution of water-soluble epoxy resin. Then 25 g of potassium titanate whiskers and 2.5 of perinone pigment (red) were added to give a fiber size liquid. Mat-shaped pitch-type carbon fibers (75 g) were impregnated with the fiber size liquid, and 150 g of nylon 6 powder (average grain size 100 μm) was uniformly mixed with the wet fibers. The wet mixture was predried at 80°C by hot air to remove the excess water. The predried mixture was supplied into a mixing extruder and extruded into an extrudate of 4 mm in diameter which was cut to 5 mm length and dried at 150°C for 2 hours.

The obtained pelletized red fiber-containing resin composition weighed 249 g.

## Example 5

A 2 g quantity of epoxy resin curing agent and 280 g of water were added to 9 g of a 50% aqueous solution of water-soluble epoxy resin, and the mixture was stirred. Then 25 g of potassium titanate whiskers and 5 of cadmium yellow were added to give a fiber size liquid. Mat-shaped pitch-type carbon fibers (75 g) were impregnated with the fiber size liquid, and 150 g of nylon 6 powder (average grain size 100 μm) was uniformly mixed with the fibers. The wet mixture was predried at 80°C by hot air to remove the excess water. The predried mixture was supplied into a mixing extruder and extruded into an extrudate of 4 mm in diameter which was cut to 5 mm length and dried at 120°C for 2.5 hours.

The obtained pelletized yellow fiber-containing resin composition weighed 251 g.

## Example 6

The same procedure as in Example 4 was repeated with the exception of using cobalt blue as a coloring additive, producing a pelletized blue fiber-containing resin composition weighing 250 g.

### Example 7

The same procedure as in Example 4 was repeated with the exception of using a 1 : 1 mixture of mat-shaped pitch-type carbon fibers and mat-shaped glass fibers, producing a pelletized carbon fiber/glass fiber-containing epoxy resin composition of red color.

### Example 8

A 280 g quantity of water was added to 9 g of a 50% aqueous solution of water-soluble epoxy resin. Then 25 g of potassium titanate whiskers, 25 g of meso-carbon microbeads and 2.5 of perinone pigment (red) were added to give a fiber size liquid. Mat-shaped pitch-type carbon fibers (75 g) were impregnated with the fiber size liquid and 150 g of nylon 6 powder (average grain size 100 μm) was uniformly mixed with the fibers. The wet mixture was predried at 80°C by hot air to remove the excess water. The predried mixture was supplied into a mixing extruder and extruded into an extrudate of 4 mm in diameter which was divided into pellets of 5 mm length and dried at 150°C for 2 hours.

The obtained pelletized red fiber-containing resin composition weighed 273 g.

### Example 9

A 2 g quantity of epoxy resin curing agent and 280 g of water were added to 9 g of a 50% aqueous solution of water-soluble epoxy resin, and the mixture was stirred. Then 25 g of potassium titanate whiskers, 25 of carbon black and 5 g of cadmium yellow were added to give a fiber size liquid. Mat-shaped pitch-type carbon fibers (75 g) were impregnated with the fiber size liquid, and 150 g of nylon 6 powder (average grain size 100 μm) was uniformly mixed with the fibers. The wet mixture was pressed at 80°C by a roller to remove the excess water, supplied into a mixing extruder and extruded into an extrudate of 4 mm in diameter which was cut to 4 mm length and dried at 120°C for 2.5 hours.

The obtained pelletized yellow fiber-containing resin composition weighed 256 g.

### Example 10

The same procedure as in Example 8 was repeated with the exception of using cobalt blue as a coloring additive, producing a pelletized blue fiber-containing resin composition weighing 275 g.

### Example 11

The same procedure as in Example 8 was repeated with the exception of using a 1 : 1 mixture of mat-shaped carbon fibers and mat-shaped glass fibers, producing a pelletized carbon fiber-glass fiber-epoxy resin composition of red color.

### Example 12

A 280 g quantity of water was added to 9 g of a 50% aqueous solution of water-soluble epoxy resin. Then 25 g of potassium titanate whiskers, 25 g of meso-carbon microbeads and 2.5 of perinone pigment (red) were added to give a fiber size liquid. Mat-shaped pitch-type carbon fibers (75 g) were impregnated with the fiber size liquid and manually pressed to achieve uniform spread. The wet fibers were predried at 80°C by hot air to remove the excess water.

The predried fibers were supplied into a mixing extruder and extruded into an extrudate of 4 mm in diameter which was cut to 5 mm length and dried at 150°C for 2 hours.

The obtained pelletized brown fiber-containing resin composition weighed 122.4 g.  ·

### Example 13

A 28 g quantity of water was added to 20 g of an emulsion of ether-ester type anionic polyurethane (30% concentration), and the mixture was stirred. Then 25 g of potassium titanate whiskers, 25 g of carbon black and 5 of cadmium yellow were added to give a fiber size liquid. Mat-shaped pitch-type carbon fibers (75 g) were impregnated with the fiber size liquid. The wet fibers were predried at 80°C in a hot-air drying oven.

The predried fibers were supplied into a mixing extruder and extruded into an extrudate of 4 mm in diameter which was cut to 5 mm length and dried at 120°C for 2.5 hours.

The obtained pelletized yellow fiber-containing resin composition weighed 124.5 g.

### Example 14

The same procedure as in Example 12 was repeated with the exception of using cobalt blue as a coloring additive, producing a pelletized blue fiber-containing resin composition weighing 124 g.

### Example 15

The same procedure as in Example 13 was repeated with the exception of using an electroconductive carbon black (trademark "Kechen Black", Akzo Co., The Netherlands) in place of carbon black, producing a pelletized carbon fiber-urethane resin composition of yellow color.

### Example 16

A 280 g quantity of water was added to 9 g of a 50% aqueous solution of water-soluble epoxy resin. Then 25 g of potassium titanate whiskers, 25 g of meso-carbon microbeads and 2.5 of perinone pigment (red) were added to give a fiber size liquid. Mat-shaped glass fibers (75 g) were impregnated with the fiber size liquid, and pressed manually to achieve uniform spread. The wet fibers were predried at 80°C in a hot air oven to remove the excess water.

The predried fibers were supplied into a mixing extruder, and extruded into an extrudate of 4 mm in diameter which was cut to 5 mm length and dried at 160°C for 2 hours.

The obtained pelletized red fiber-containing resin composition weighed 123.5 g.

## Claims

1. A pelletized fiber-containing coloring resin composition comprising:
   (a) at least one member selected from the group consisting of carbon fibers, glass fibers and aramid fibers,
   (b) a fiber size soluble or dispersible in a liquid medium,
   (c) whiskers and
   (d) a coloring agent.

2. A pelletized fiber-containing coloring resin composition according to claim 1 wherein the fiber size is at least one member selected from the group consisting of epoxy resin, phenolic resin, polyamide resin, urethane resin, unsaturated polyester resin and rubber.

3. A pelletized fiber-containing coloring resin composition according to claim 1 wherein the whiskers are those of white color.

4. A pelletized fiber-containing coloring resin composition according to claim 1 which comprises:
   (a) 100 parts by weight of at least one member selected from the group consisting of carbon fibers, glass fibers and aramid fibers,
   (b) about 0.5 to about 10 parts by weight of a fiber size,
   (c) about 2 to about 100 parts by weight of whiskers and
   (d) about 0.1 to about 10 parts by weight of a coloring agent.

5. A pelletized fiber-containing coloring resin composition according to claim 4 wherein the fiber size is at least one member selected from the group consisting of epoxy resin, phenolic resin, polyamide resin, urethane resin, unsaturated polyester resin and rubber.

6. A process for preparing a pelletized fiber-containing coloring resin composition, the process comprising the steps of applying a liquid to (a) at least one member selected from the group consisting of carbon fibers, glass fibers and aramid fibers, said liquid comprising (b) a fiber size soluble or dispersible in a liquid medium, (c) whiskers and (d) a coloring agent, mixing the fibers in a wet state, cutting or dividing the mixture into pellets and drying the pellets.

7. A process according to claim 6 wherein the fiber size is at least one member selected from the group consisting of epoxy resin, phenolic resin, polyamide resin, urethane resin, unsaturated polyester resin and rubber.

8. A process according to claim 6 wherein the concentration of the fiber size in the liquid medium is about 1 to about 10% by weight.

9. A pelletized fiber-containing coloring resin composition comprising:
   (a) at least one member selected from the group consisting of carbon fibers, glass fibers and aramid fibers,
   (b) a fiber size soluble or dispersible in a liquid medium,
   (c) whiskers,
   (d) a coloring agent and
   (e) a matrix resin.

10. A pelletized fiber-containing coloring resin composition according to claim 9 wherein the fiber size is at least one member selected from the group consisting of epoxy resin, phenolic resin, polyamide resin, urethane resin, unsaturated polyester resin and rubber.

11. A pelletized fiber-containing coloring resin composition according to claim 9 wherein the whiskers are those of white color.

12. A pelletized fiber-containing coloring resin composition according to claim 9 wherein the matrix resin is polyamide resin, polyphenylene sulphite resin, polyacetal resin or polypropylene resin.

13. A pelletized fiber-containing coloring resin composition according to claim 9 which comprises:
   (a) 100 parts by weight of at least one member selected from the group consisting of carbon fibers, glass fibers and aramid fibers,
   (b) about 0.5 to about 10 parts by weight of a fiber size,
   (c) about 0.1 to about 10 parts by weight of whiskers,
   (d) about 0.1 to about 30 parts by weight of a coloring agent and
   (e) about 60 to about 1000 parts by weight of a matrix resin.

14. A process for preparing a pelletized fiber-containing coloring resin composition, the process comprising the steps of applying a liquid to (a) at least one member selected from the group consisting of carbon fibers, glass fibers and aramid fibers, said liquid comprising (b) a fiber size soluble or dispersible in a liquid medium, (c) whiskers and (d) a coloring agent, mixing (e) a matrix resin with (a) the fibers in a wet state during or after application of the liquid, cutting or dividing the mixture into pellets and drying the pellets.

15. A process according to claim 14 wherein the fiber size is at least one member selected from the group consisting of epoxy resin, phenolic resin, polyamide resin, urethane resin, unsaturated polyester resin and rubber.

16. A process according to claim 14 wherein the concentration of the fiber size in the liquid medium is about 1 to about 10% by weight.

17. A process according to claim 14 wherein the matrix resin is polyamide resin, polyphenylene sulphite resin, polyacetal resin or polypropylene resin.

18. A pelletized fiber-containing coloring resin composition comprising:

(a) at least one member selected from the group consisting of carbon fibers, glass fibers and aramid fibers,

(b) a fiber size soluble or dispersible in a liquid medium,

(c) whiskers,

(d) a coloring agent and

(f) a granular carbon material.

19. A pelletized fiber-containing coloring resin composition according to claim 18 wherein the fiber size is at least one member selected from the group consisting of epoxy resin, phenolic resin, polyamide resin, urethane resin, unsaturated polyester resin and rubber.

20. A pelletized fiber-containing coloring resin composition according to claim 18 wherein the whiskers are those of white color.

21. A pelletized fiber-containing coloring resin composition according to claim 18 wherein the granular carbon material is meso-carbon microbeads and/or carbon black.

22. A pelletized fiber-containing coloring resin composition according to claim 18 which comprises:

(a) 100 parts by weight of at least one member selected from the group consisting of carbon fibers, glass fibers and aramid fibers,

(b) about 0.5 to about 10 parts by weight of a fiber size,

(c) about 2 to about 100 parts by weight of whiskers,

(d) about 0.1 to about 30 parts by weight of a coloring agent and

(f) about 30 to about 900 parts by weight of a granular carbon material.

23. A process for preparing a pelletized fiber-containing coloring resin composition, the process comprising the steps of applying a liquid to (a) at least one member selected from the group consisting of carbon fibers, glass fibers and aramid fibers, said liquid comprising (b) a fiber size soluble or dispersible in a liquid medium, (c) whiskers, (d) a coloring agent and (f) a granular carbon material, mixing the fibers in a wet state, cutting or dividing the mixture into pellets and drying the pellets.

24. A process according to claim 23 wherein the fiber size is at least one member selected from the group consisting of epoxy resin, phenolic resin, polyamide resin, urethane resin, unsaturated polyester resin and rubber.

25. A process according to claim 23 wherein the concentration of the fiber size in the liquid medium is about 1 to about 10% by weight.

26. A process according to claim 23 wherein the whiskers are those of white color.

27. A process according to claim 23 wherein the granular carbon material is meso-carbon microbeads and/or carbon black.

28. A pelletized fiber-containing coloring resin composition comprising:

(a) at least one member selected from the group consisting of carbon fibers, glass fibers and aramid fibers,

(b) a fiber size soluble or dispersible in a liquid medium,

(c) whiskers,

(d) a coloring agent,

(e) a matrix resin and

(f) a granular carbon material.

29. A pelletized fiber-containing coloring resin composition according to claim 28 wherein the fiber size is at least one member selected from the group consisting of epoxy resin, phenolic resin, polyamide resin, urethane resin, unsaturated polyester resin and rubber.

30. A pelletized fiber-containing coloring resin composition according to claim 28 wherein the whiskers are those of white color.

31. A pelletized fiber-containing coloring resin composition according to claim 28 wherein the matrix resin is polyamide resin, polyphenylene sulphite resin, polyacetal resin or polypropylene resin.

32. A pelletized fiber-containing coloring resin composition according to claim 28 wherein the granular carbon material is meso-carbon microbeads and/or carbon black.

33. A pelletized fiber-containing coloring resin composition according to claim 28 which comprises:

(a) 100 parts by weight of at least one member selected from the group consisting of carbon fibers, glass fibers and aramid fibers,

(b) about 0.5 to about 10 parts by weight of a fiber size,

(c) about 2 to about 100 parts by weight of whiskers,

(d) about 0.1 to about 30 parts by weight of a coloring agent,

(e) about 60 to about 1000 parts by weight of a matrix resin and

(f) about 30 to about 900 parts by weight a granular carbon material.

34. A process for preparing a pelletized fiber-containing coloring resin composition, the process comprising the steps of applying a liquid to (a) at least one member selected from the group consisting of carbon fibers, glass fibers and aramid fibers, said liquid comprising (b) a fiber size soluble or dispersible in a liquid medium, (c) whiskers, (d) a coloring agent and (f) a granular carbon material, mixing (e) a matrix resin with (a) the fibers in a wet state or after application of the liquid, cutting or dividing the mixture into pellets and drying the pellets.

35. A process according to claim 34 wherein the fiber size is at least one member selected from the group consisting of epoxy resin, phenolic resin, polyamide resin, urethane resin, unsaturated polyester resin and rubber.

36. A process according to claim 34 wherein the concentration of the fiber size in the liquid medium is about 1 to about 10% by weight.

37. A process according to claim 34 wherein the whiskers are those of white color.

38. A process according to claim 34 wherein the granular carbon material is meso-carbon microbeads and/or carbon black.

39. A process according to claim 34 wherein the matrix resin is polyamide resin, polyphenylene sulphite resin, polyacetal or polypropylene resin.